# EUROPÄISCHE PATENTANMELDUNG

(11) **EP 1 464 219 A1**
(43) Veröffentlichungstag der Anmeldung: **06.10.2004**
(21) Anmeldenummer: 04004286.3
(22) Anmeldetag: 26.02.2004
(51) Int. Cl.: A01G 9/24

(54) **Klimagerät sowie Klimatisierungsverfahren für die Pflanzenzucht**

(30) Priorität: 04.04.2003 DE 10315626
(71) Anmelder: FORSCHUNGSZENTRUM JÜLICH GMBH, 52425 Jülich (DE)
(72) Erfinder: Reisinger, Gerhard, 89257 Illertissen (DE)

(57) **Zusammenfassung**

Die Erfindung betrifft ein Klimagerät sowie ein Klimatisierungsverfahren für die Pflanzenzucht.

Erfindungsgemäß wird ein Ventilator (3) und ein Wärmeaustauscher (4) im wesentlichen in vertikaler Anordnung an der Stirnseite eines Kulturtisches (6) in einem Gewächshaus angebracht, so dass bei Betrieb ein im wesentlichen nach unten gerichteter temperierter Luftstrom auf den Boden geführt wird, von wo aus sich die Luft verteilen kann. Die Luftführung kann dabei gerichtet erfolgen, nämlich von oben nach unten oder von unten nach oben. Weiterhin kann auch ein Luftstrom in Längsrichtung oder in Querrichtung zu den Pflanzen erzeugt werden.

## Beschreibung

Die Erfindung betrifft ein Klimagerät sowie ein Klimatisierungsverfahren für die Pflanzenzucht nach dem Oberbegriff des Anspruchs 1.

Für die Aufzucht von Pflanzen im Forschungs- und Entwicklungsbereich sowie für die Pflanzenproduktion im kommerziellen Bereich werden vielfach klimatisierte Wachstumskammern oder klimatisierte Zellen bzw. Abteile von Gewächshäusern verwendet, die mit Kulturtischen ausgestattet sind. Dabei werden die Klimageräte vorwiegend unter den Kulturtischen angeordnet, um eine Beschattung der Pflanzen zu vermeiden. Für geringe Ansprüche an die Kühlleistung wird die adiabatische Kühlung der Luft genutzt, indem die Frisch- oder Umluft durch feuchte Matten geführt oder mit Wasser besprüht wird. Für höhere Kühlansprüche werden Wärmetauscher eingesetzt, wobei die Kühlleistung entweder mit Kältemaschinen mit Direktverdampfung oder Kaltwassersätze über Kaltwasser bereit gestellt wird.

Problematisch bei den bisherigen Geräten ist, der hohe Platzbedarf, die ungleichmäßige Temperaturverteilung im Bereich der Pflanzen, die undefinierte und ungleichmäßige Luftgeschwindigkeitsverteilung und die geringe Flexibilität bezüglich der wechselnden Anforderungen vor allem im Forschungsbereich.

Es ist daher die Aufgabe der Erfindung ein Klimagerät zur Verfügung zu stellen, welches den wechselnden Anforderungen, insbesondere in der Forschung gerecht wird und eine definierte Luftgeschwindigkeitsverteilung sowie eine gleichmäßige Temperaturverteilung ermöglicht. Weiterhin soll der Platzbedarf reduziert werden. Es soll ein Klimatisierungsverfahren geschaffen werden, welches eine definierte und für alle Pflanzen gleichmäßige Kultivierung ermöglicht.

Ausgehend vom Oberbegriff des Anspruchs 1 wir die Aufgabe gelöst, mit den im kennzeichnenden Teil des Anspruchs 1 angegebenen Merkmalen.

Mit dem erfindungsgemäßen Klimagerät bzw. Gewächshausklimagerät ist es nunmehr möglich, unter Einsatz eines geringen Platzaufwandes, eine definierte Temperatur und Luftgeschwindigkeit im Pflanzenbestand sicherzustellen und ein Gerät zu schaffen, welches flexibel, das heißt unter variablen Anforderungen, einsetzbar ist. Das erfindungsgemäße Klimatisierungsverfahren ermöglicht eine definierte gleichmäßige Klimatisierung, die an die unterschiedlichen Anforderungen verschiedener Pflanzen bzw. Forschungsvorhaben adaptiert werden kann.

Vorteilhafte Weiterbildungen der Erfindung sind in den Unteransprüchen angegeben:

Die Zeichnungen zeigen die Schemata von unterschiedlichen Details der erfindungsgemäßen Vorrichtung.

Es zeigt:
- Fig.1:: eine erfindungsgemäße Vorrichtung
- Fig.2:: die Luftführung in der erfindungsgemäßen Vorrichtung in Längsrichtung
- Fig.3:: eine alternative Luftführung in Querrichtung.
- Fig.4:: eine vertikale Luftführung
- Fig.5:: eine vertikale Luftführung
- Fig.6:: eine nach unten gerichtete vertikale Luftführung
- Fig.7:: eine vertikale Luftführung
- Fig.8:: eine vertikale Luftführung
- Fig.9:: eine Ausführungsform mit künstlicher Belichtung.
- Fig.10:: ein Klimatischgerät mit Mobilrinnen
- Fig. 11a,b:: ein Klimatischgerät mit Kühlmatte
- Fig.12:: ein Querschnitt einer bevorzugten Ausführungsform eines Ventilators.

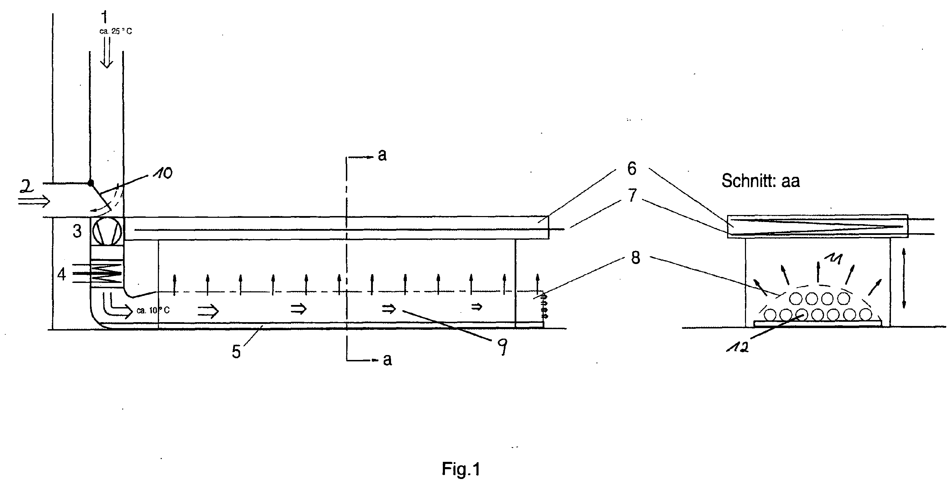

Figur 1 zeigt eine erfindungsgemäße Vorrichtung mit einer vertikalen, vorzugsweise transparenten Luftzufuhr 1 und einer Frischluftzufuhr 2, die über eine bewegliche Klappe 10 zum Regulieren des Verhältnisses zwischen Umluft und Frischluft mit dem Eingang eines Ventilators 3 in Verbindung stehen. Die Frischluftzufuhr 2 ist hier beispielhaft seitlich angeordnet, kann jedoch, je nach Erfordernis, auch einer anderen Richtung angebracht sein. Unterhalb des Ventilators 3 befindet sich ein mindestens ein Wärmetauscher 4. Unterhalb des Wärmetauschers 4 befindet sich eine Kondensatwanne bzw. Luftbefeuchtungswanne 5, welche sich längs unter dem vorzugsweise höhenverstellbaren Kulturtisch 6 befindet. Der Kulturtisch 6 kann optional mit einem Wärmeaustauscher 7 für die Wurzelraumklimatisierung ausgestattet werden. Über der Kondensatwanne 5 befindet sich eine luftdurchlässige Abdeckung 8, für den Luftstrom 9 mit Öffnungen 11, für den Austritt von Luft und Öffnungen 12, für den horizontalen Austritt von Luft. Alternativ sind auch ein oder mehrere Gewebeschläuche für die Luftverteilung möglich. Der Schnitt aa zeigt einen Querschnitt auf die vertikale Linie aa.

In den folgenden Figuren sind den gleichen Vorrichtungsmerkmalen die selben Bezugszeichen zugeordnet.

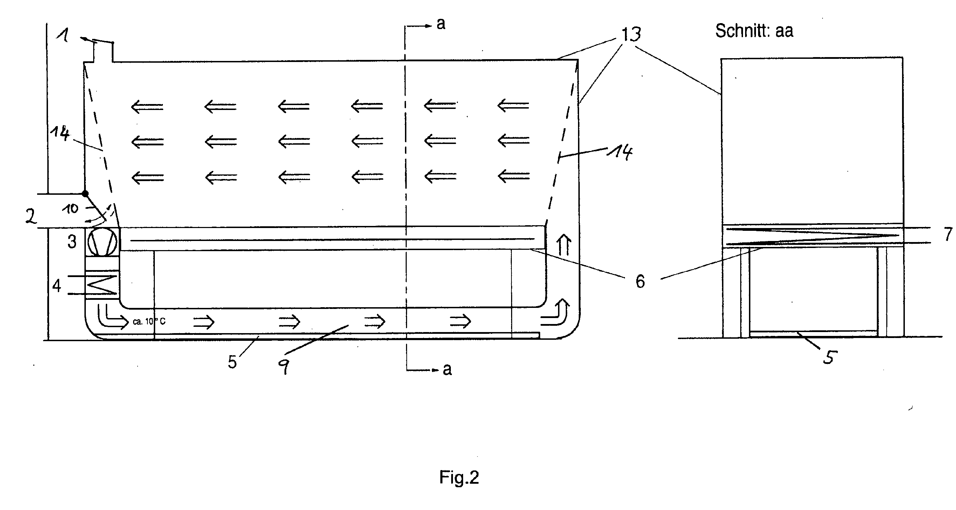

Figur 2 zeigt eine Ausführungsform mit einer transparenten Einhausung 13, wobei mit transparentem, gelochten oder porösem Material, das sich an den Kopfseiten der Vorrichtung 14 befindet, die Luftgleichrichtung bzw. Verteilung bewirkt wird.

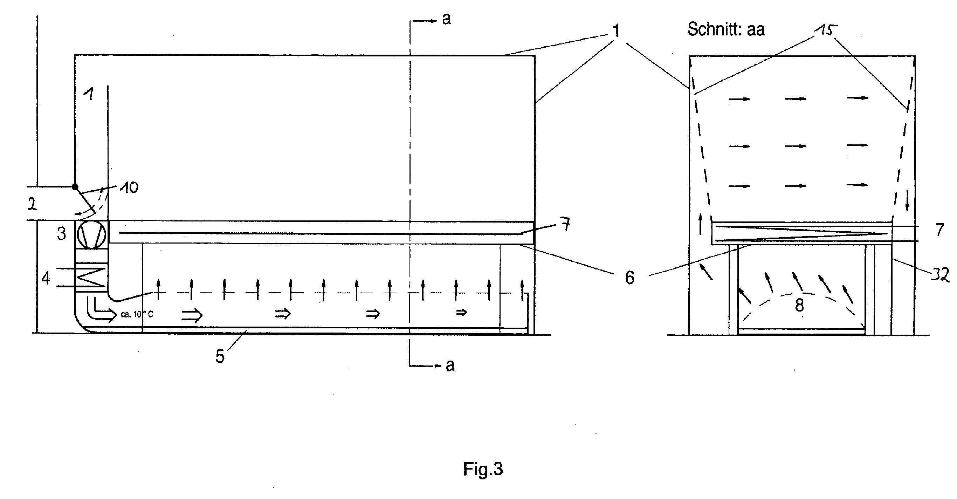

Figur 3 zeigt die Vorrichtung gemäß Figur 2, jedoch mit einer um 90° gedrehten Luftführung quer zur Tischlängsrichtung. In ihr bezeichnen die Bezugszeichen 13 die transparente Einhausung 15 und das transparente, gelochte oder poröse Material, das sich hier an der Längsseite der Vorrichtung befindet. Bezugszeichen 32 bezeichnet eine Trennwand.

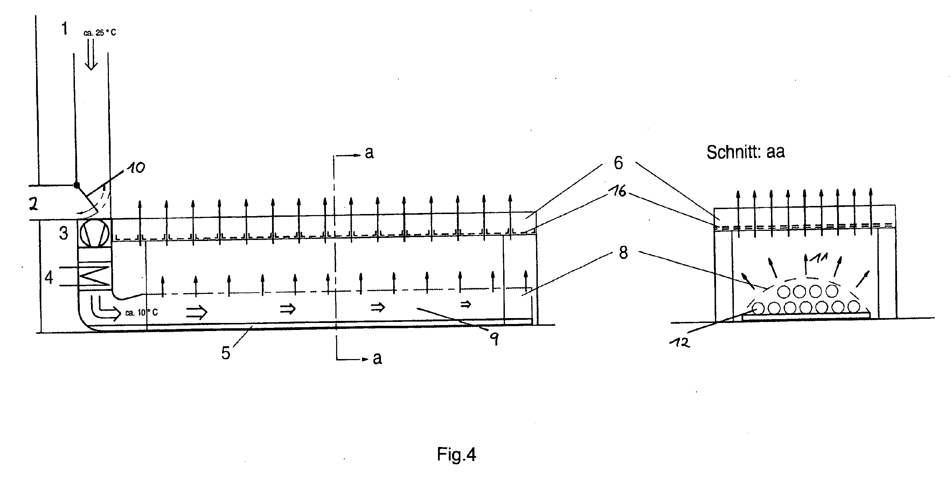

Die in Figur 4 dargestellte Ausführungsform umfasst Rinnen mit Spalt als Tischbelag 16, auf die die Kulturpflanzen gestellt werden können, wobei die klimatisierte Luft ganz oder teilweise durch die Spalten geführt wird.

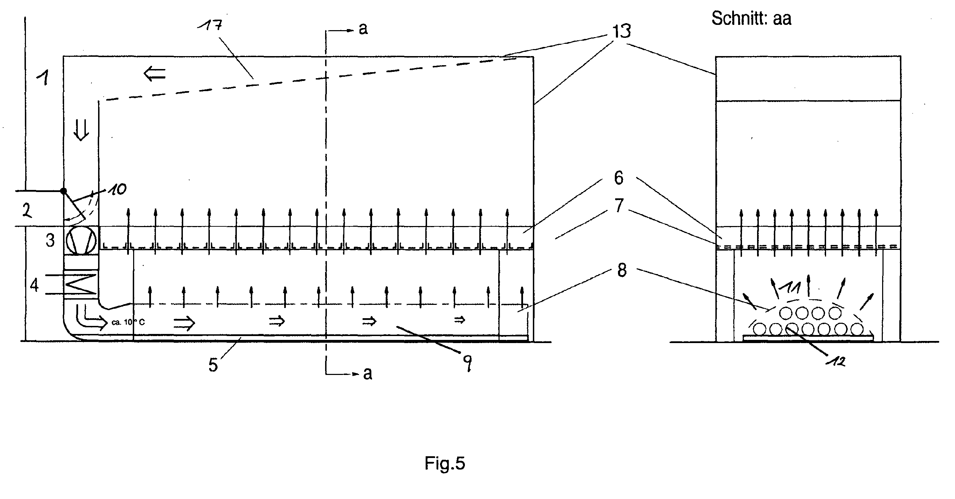

Die in Figur 5 dargestellte Vorrichtung gemäß Figur 4 besitzt eine transparente Einhausung 13, wobei durch ein gelochtes oder poröses transparentes Material 17 die Gleichmäßigkeit der vertikalen Luftführung von unten nach oben gewährleistet wird.

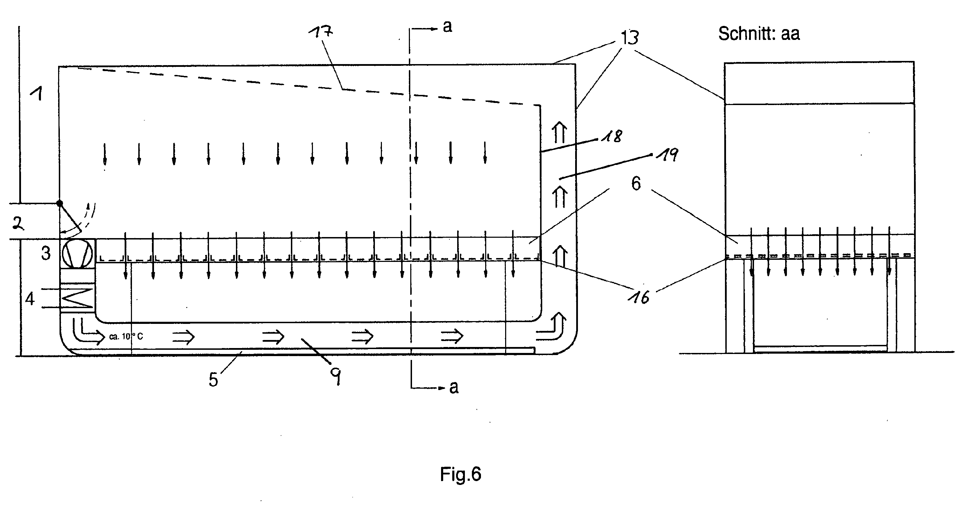

Figur 6 zeigt gemäß Figur 5 eine Ausführungsform der erfindungsgemäßen Vorrichtung, bei der hier die Luft vertikal von oben nach unten geführt wird, welche den Luftaustausch zwischen dem Bereich oberhalb der Rinnen 16 und der Luftzufuhr 1,2 ermöglicht.

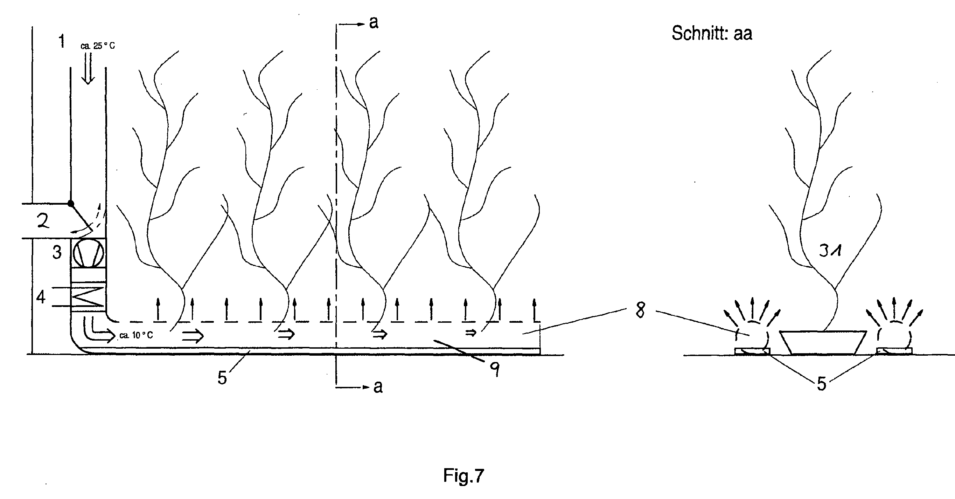

In Figur 7 befinden sich die Pflanzentröge oder Kübel 31 auf dem Boden. Als Mittel zur Klimatisierung befinden sich auf dem Boden Kondensatwannen 5, wobei mit Gewebe- oder perforierten Schläuchen 8 die gleichmäßige Luftverteilung bewirkt wird.

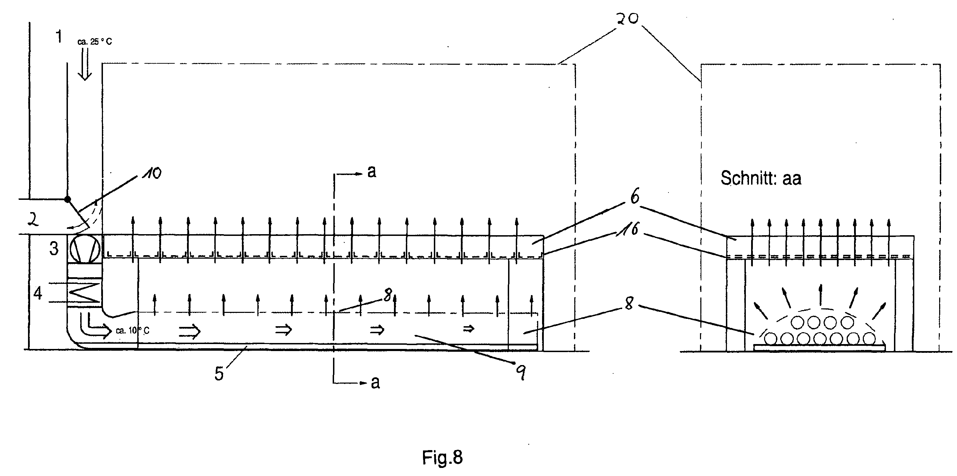

Die in Figur 8 dargestellte Ausführungsform besitzt eine Einhausung 13, mit Insektenschutzgitter 20, wobei das Insektenschutzgitter vorzugsweise von innen nach außen mit Luft durchströmt wird. Durch den Überdruck unter dem Schutzgitter wird das Eindringen von Insekten selbst an den Spalten oder kleinen Löchern verhindert.

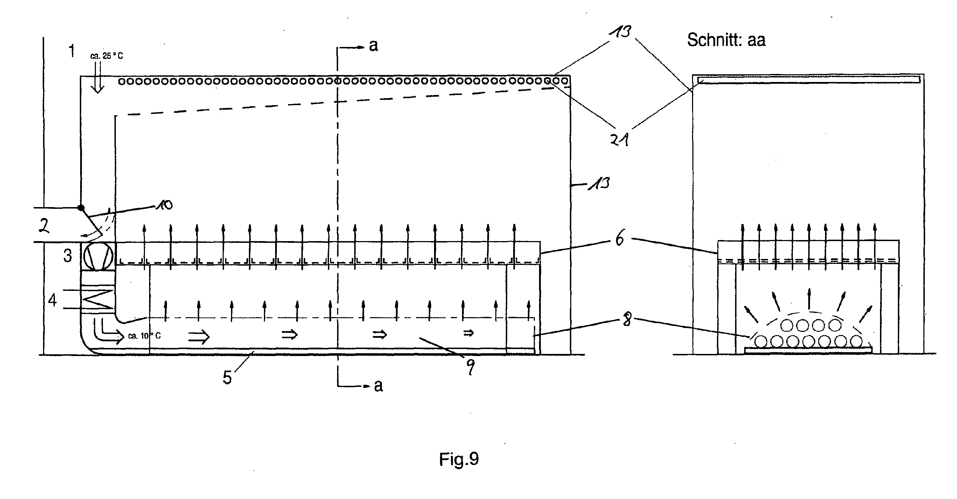

In Figur 9 ist eine Ausführungsform dargestellt, bei der neben der Klimatisierung auch eine Pflanzenbelichtung 21 an der Oberseite der Einhausung angeordnet ist.

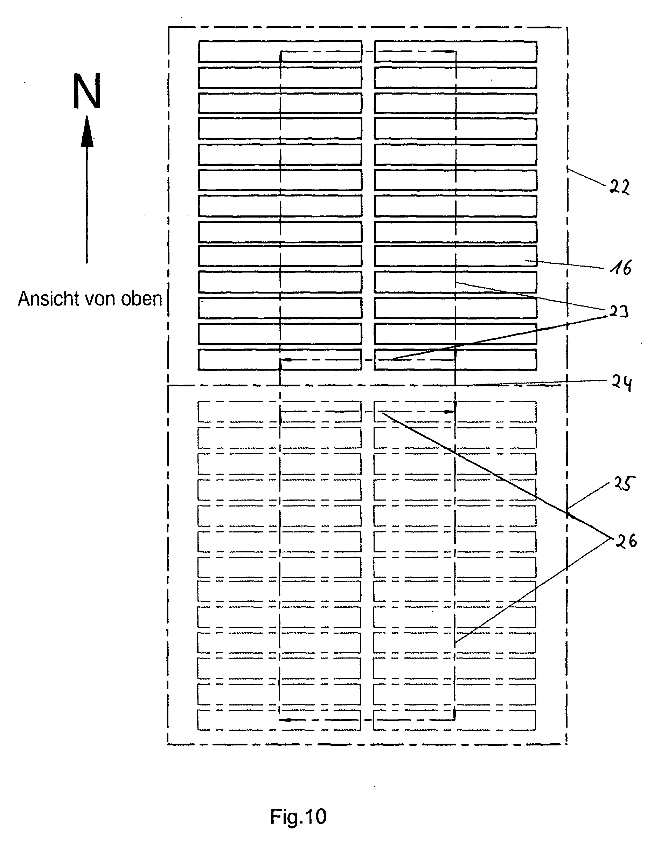

Figur 10 zeigt die Draufsicht auf einen Kulturtisch 6 mit oder ohne Einhausung. In ihr ist mit dem Bezugszeichen 22 der Belichtungsbereich, der durch gestrichelte Linien angedeutet ist, dargestellt. Mit 16 sind die Rinnen bezeichnet, in denen sich die Pflanzen befinden. Bezugszeichen 23 bezeichnet den Rotationsweg, den die Rinnen 16 im Bereich mit Kunstlicht durchlaufen. Die Schleuse 24 trennt den Belichtungsbereich mit Kunstlicht 22 von einem Bereich mit natürlichem Licht 25. Das Bezugszeichen 26 bezeichnet den Rotationsweg der Rinnen 16 im Bereich mit natürlicher Belichtung 25 in analoger Weise, wie im Belichtungsbereich mit Kunstlicht 22. Die Pflanzen können dabei wahlweise unter der Belichtungszone oder der unbelichteten Zone rotiert werden.

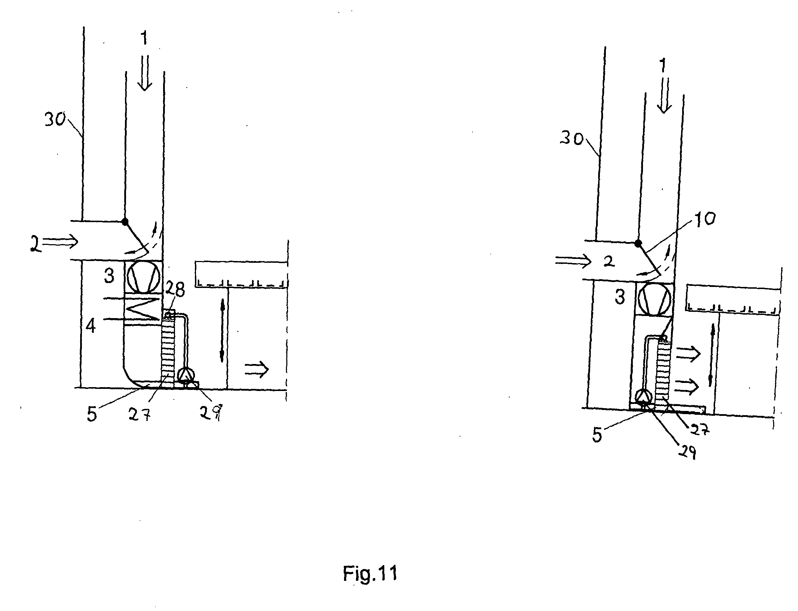

Figur 11 zeigt eine Detaildarstellung in der im Ausgangsbereich des Luftstroms nach dem Wärmetauscher 4 eine Kühlmatte 27 für die adiabatische Luftkühlung angeordnet ist, an die ein Verteilerrohr 28 mit einer Umwälzpumpe 29 angebracht ist. Bezugszeichen 30 bezeichnet die Gewächshausstehwand.

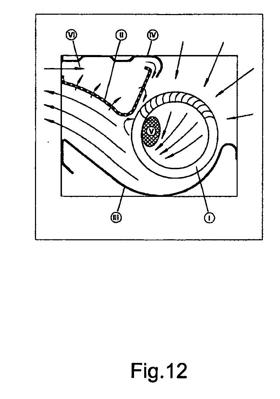

Figur 12 zeigt einen Querschnitt durch einen Querstromventilator.

Im Folgenden soll die erfindungsgemäße Vorrichtung und deren Funktionsweise sowie das erfindungsgemäße Klimatisierungsverfahren erläutert werden.

Durch die Luftzufuhr 1 wird entweder Frischluft oder Umluft aus dem Gewächshaus über den Ventilator 3 zugeführt. Die Luftzufuhr 1 und/oder die Frischluftzufuhr 2 sind vorzugsweise aus lichtdurchlässigem Material, damit die Lichtreduktion minimiert wird. Mit der Klappe 10 kann der Umluft-/Frischluftanteil stufenlos eingestellt werden. Zur Luftförderung können mehrere Ventilatoren 3 verschiedener Bauart entlang der Tischkante in der Reihe angeordnet werden, jedoch ist für diese Anwendung ein sogenannter Querstromventilator besonders geeignet, wie er beispielhaft in Figur 12 dargestellt ist. Durch diese Anordnung wird der Flächenbedarf für das Klimagerät auf ein Minimum reduziert. Querstromventilatoren weisen neben einem hochstabilen Verhalten, höchste Leistungswerte, eine sehr kompakte, das heißt vorzugsweise eine lange und schmale Ausführungsform und damit platzsparende Bauweise auf, sind gut stufenlos regelbar und verursachen nur einen außerordentlich geringen Geräuschpegel. Insbesondere die Luftzufuhr 1 ist vorzugsweise lichtdurchlässig ausgestaltet, damit die solare Einstrahlung im Gewächshaus möglichst wenig reduziert wird. Der durch den Ventilator 3 geförderte Luftstrom 9 passiert einen oder mehrere Wärmetauscher 4 zum heizen und/oder kühlen oder eine Kühlmatte 27, der/die analog zum Ventilator 3 entlang der Stirnseite des Kulturtisches 6 angeordnet ist/sind, vorzugsweise an der Wandseite und wird über die Kondensatwanne bzw. Luftbefeuchtungswanne 5 geleitet, bevor sie über die luftdurchlässige Abdeckung 8, die die Funktion eines Gleichrichters übernimmt, in den Kulturraum eintritt. Das Gebläse bzw. der Ventilator 3 und der Wärmetauscher sind erfindungsgemäß übereinander, vorzugsweise im wesentlichen in vertikaler Anordnung angeordnet, so dass ein im wesentlichen nach unten gerichteter Luftstrom entsteht. Diese Anordnung ermöglicht eine Vergrößerung der Kulturfläche bei gleichbleibenden Flächen des Gewächshauses, was zu einer erheblichen Kostenreduktion führt. Dabei wurde von der üblichen Verfahrensweise, einen horizontalen Luftstrom zu erzeugen, um das Kondensat vom Luftstrom fern zu halten, abgesehen. Dies ermöglicht auch eine gute Klimatisierung von Pflanzen, welche auf dem Boden abgestellt sind. Der Wärmetauscher 4 kann sowohl zur Erwärmung der Luft als auch zur Kühlung der Luft eingesetzt werden. Die einzustellenden Temperaturen sind dem Fachmann bekannt und hängen unter anderem von den zu kultivierenden Pflanzen und den Versuchsvorgaben ab. Der Ventilator 3 und der Wärmetauscher 4 sind vorzugsweise am Kopfteil angeordnet, da dies die Verwendung von höhenverstellbaren Kulturtischen 6 ermöglicht und nur einen geringen Flächenbedarf für das Klimagerät bewirkt. Das bei einer Abkühlung der Luft unter bestimmten Betriebsbedingungen entstehende Kondensat wird in der Kondensatwanne 5 gesammelt und dort abgeführt. Die Kondensatwanne 5 kann auch dazu genutzt werden, einen durchgehenden Wasserspiegel zu halten, um die Luft zu reinigen und adiabatisch zu befeuchten, zudem kann dieses Wasser auch erwärmt und dadurch der Luftstrom definiert befeuchtet werden. Hierzu sind Mittel zum Temperieren des in der Kondensatwanne 5 befindlichen Wassers vorgesehen. Hierdurch wird die Überwindung des Vorurteils, dass insbesondere gekühlte Luftströme nicht nach unten gerichtet werden sollen, in einen weiteren Vorteil umgewandelt.
Die luftdurchlässige Abdeckung 8 ermöglicht den Durchtritt von Luft nach oben und/oder zur Seite durch die Öffnungen 11 und zur Seite durch die Öffnungen 12. Die luftdurchlässige Abdeckung 8 kann über die Kondensatwanne 5 gespannt sein und bewirkt die Verteilung der Luft. Die Öffnungen 12, die im Schnitt aa an der Stirnseite der Anlage zu sehen sind, können auch an den Längsseiten (hier nicht eingezeichnet) vorhanden sein. Die Abdeckung 8 kann aus verschiedenen Materialien, wie beispielsweise Blech, vorzugsweise lichtdurchlässigem Material, wie Plexiglas, Folie oder auch einem Gewebe bestehen, welches luftdurchlässig ist und beispielsweise über ein Drahtgeflecht gelegt ist. Es kommt lediglich darauf an, dass die Luft nach oben und/oder zur Seite entweichen kann. Vorzugsweise kann die Luft in alle Richtungen entweichen, damit ein möglichst gleichmäßiges Raumklima entsteht. Die die luftdurchlässige Abdeckung 8 durchtretende Luft strömt nach oben, und kann in dem Fall, in dem der Kulturtisch 6 einen für Luft durchlässigen Boden, beispielsweise in Form eines Gitters, durch den Boden nach oben in den Bereich der Kulturpflanzen treten. Auf dem Kulturtisch können Pflanzen in einer durchgehenden Bodenschicht oder in einzelnen Töpfen kultiviert werden. Durch einen zusätzlichen Wärmetauscher 7 kann der Wurzelraum gezielt temperiert werden. Dabei ist es vorteilhaft, wenn die freie, feuchte Bodenoberfläche mit einer wärmedämmenden, vorzugsweise beidseitig gut reflektierenden Abdeckung abgedeckt wird.

Um optimale Wachstumsbedingungen zu ermöglichen, die den Bedingungen im Freien möglichst nahe kommen, ist es vorteilhaft, eine Luftführung zu ermöglichen, die die Luftbewegungen in der freien Natur simuliert. Hiermit ist es auch möglich, gleichmäßige Temperatur- und Luftzustandsbedingungen für alle Pflanzen auf dem Kulturtisch zu schaffen. Für die Luftverteilung und Gleichrichtung an den Luftein- und Luftauslässen sind gelochte, poröse oder perforierte Materialien vorgesehen, die vorzugsweise transparent sind, damit von außen eintretendes Tageslicht möglichst vollständig auf die Kulturpflanzen fällt. Prinzipiell können diese perforierten oder gelochten Materialien auch lichtundurchlässig sein, wenn sich in deren Innenraum ein Beleuchtungsmittel befindet. Durch die Klimatisierung kann dabei die hohe Strahlungswärme der Belichtungseinrichtung abgeführt werden. Vorzugsweise ist eine lichtdurchlässige Einhausung 13 vorgesehen, welche wenigstens einen Teil der lichtdurchlässigen Platten oder Folien 14, 15, und 17 umfasst, wie sie beispielhaft in den Figuren 2, 3 und 5 dargestellt sind. Besonders bevorzugte Einhausungen 13 sowie Platten bzw. Folien 14, 15 und 17 werden durch hochtransparentes Glas mit Antireflexbeschichtung oder hochtransparente Folien aus ETFE erhalten. In einer weiteren bevorzugten Ausgestaltung der erfindungsgemäßen Vorrichtung sind Mittel zur Veränderung der Gaszusammensetzung innerhalb der Einhausung 13 oder der Platten 14, 15 und 17 vorgesehen. Diese Mittel zur Veränderung der Gaszusammensetzung können beispielsweise Gasbevorratungsgefäße sein, deren Gasaustritt an den Ventilator 3 angeschlossen ist. Hiermit können bestimmte Einflüsse der Atmosphärenzusammensetzung simuliert werden. Die Figur 3 zeigt eine Variante mit horizontalem Luftstrom in Tischquerrichtung und Figur 4 eine Variante mit vertikalem Luftstrom.
Besonders vorteilhaft in Bezug auf die Gleichmäßigkeit ist eine vertikale Luftführung im Pflanzenbestand. Der Luftstrom verhindert dadurch die Zonen mit hoher Luftfeuchtigkeit im unteren Bereich der Pflanze, was zu einer deutlichen Senkung des Infektionsdrucks durch Pilze führt. Auch die Versorgung der Pflanzen mit CO₂ wird dadurch erheblich verbessert. In den Figuren 5 bis 7 sind Varianten mit und ohne Einhausung 13 und Strömungsrichtung von unten nach oben und von oben nach unten dargestellt. Eine Strömungsrichtung von oben nach unten hat den Vorteil, dass bei empfindlichen Pflanzen der Luftstrom nicht direkt auf die Spaltöffnung der Blätter trifft.
Eine Strömungsrichtung von unten nach oben hat den Vorteil, dass der Luftstrom direkt auf die Spaltöffnungen der Blätter geleitet wird und damit der Gasaustausch und die Transpiration gesteigert werden kann.

Wie in Figur 7 dargestellt, können hochwachsende Pflanzen in Trögen oder Töpfen 31, die aus Gewichtsund/oder Raumgründen die auf dem Boden abgestellt werden müssen, können mit luftdurchlässigen Schläuchen, die ein- oder beidseitig neben den Pflanzen angeordnet sind, klimatisiert werden. Dabei ist eine offene, oder eingehauste Ausführung möglich.

Für Pflanzen, bei denen Insektenschutz nötig ist und die zwar im offenen System kultiviert werden können, kann der Kulturtisch 6 auch mit einer luftdurchlässigen Einhausung 13 ausgestattet sein. Der Kulturtisch 6 kann auch mit einem Insektenschutzgitter 20 oder Insektenschutztuch ausgestattet sein (Fig.8). Dieses Mittel zum Abhalten von Insekten 20 kann in einer Ausführungsform mit und ohne Einhausung 13 vorhanden sein.

In einer bevorzugten Ausführungsform der erfindungsgemäßen Vorrichtung sind Belichtungsmittel vorgesehen. Beispielhaft kann die Einhausung 13 an der Decke mit Lampen ausgestattet sein, wie es in Figur 9 dargestellt ist.
Weiterhin kann die Einhausung 13 mobil ausgeführt werden, damit die Einhausung bei Tag wegbewegt werden kann, um eine solare Belichtung ungehindert zu ermöglichen. Die Einhausung 13 kann zu diesem Zweck Mittel zum verschieben aufweisen.
Um die Gleichmäßigkeit des Kulturklimas weiter zu steigern, können auch die Pflanzen in Töpfen oder Rinnen auf dem Tisch rotiert werden, wie es in Figur 10 dargestellt ist. Die Pfeile geben die mögliche Rotationsrichtung an. Dies ist besonders vorteilhaft bei einer künstlichen Belichtung der Tischfläche, da mit einer künstlichen Belichtung keine ausreichend gleichmäßige Bestrahlung der Tischfläche erreichbar ist. Damit können die Pflanzen auch bei fest installierter Belichtung vor die Belichtungsfläche transportiert werden, um tagsüber die solare Bestrahlung zu ermöglichen. Diese Variante ist mit und ohne Einhausung 13 möglich. In der Mitte dieser Anlage kann eine Schleuse 24 angeordnet werden, mit der bei der eingehausten Variante einzelne Töpfe oder Rinnen zugeführt oder abgezogen werden, ohne den Kulturraum zu beeinflussen, sofern unter der Einhausung 13 z. B. eine gezielte Gaszusammensetzung vorgesehen ist. Auch Pflegearbeiten, sowie Mess- und Kontrollvorgänge an den Pflanzen können über die Schleuse 24 vorgenommen werden. Bei hochsensiblen Anwendungen, bei denen ein Kontakt der Pflanzen mit der Umwelt vermieden werden muss, kann hier auch eine sogenannte Glovebox angeordnet werden.

Für geringe Klimatisierungsanforderungen kann auch eine adiabatische Kühleinrichtung mit oder ohne Wärmetauscher integriert werden, wie sie in Figur 11 dargestellt ist. Die adiabatische Kühlung kann dabei sowohl mit einer Kühlmatte 27, als auch mit einer nachgeschalteten Sprühkammer ausgeführt werden.

## Patentansprüche

1. Klimagerät umfassend ein Gebläse (3) und mindestens einen Wärmetauscher (4),
**dadurch gekennzeichnet,**
**dass** das Gebläse (3) über dem Wärmetauscher (4) und/oder einer Kühlmatte positioniert ist, wobei sich Gebläse (3) und Wärmetauscher (4) an einer Stirnseite eines Kulturtisches positionierbar sind.

2. Klimagerät nach Anspruch 1,
**dadurch gekennzeichnet,**
**dass** sich im wesentlichen, in vertikaler Anordnung zu dem Gebläse(3), eine Luftzufuhr (1) für die Zufuhr von Frischluft und/oder Umluft befindet.

3. Klimagerät nach Anspruch 1 oder 2,
**dadurch gekennzeichnet,**
**dass** die Luftzufuhr (1) aus transparentem Material besteht.

4. Klimagerät nach einem der Ansprüche 1 bis 3,
**dadurch gekennzeichnet,**
**dass** eine separate Frischluftzufuhr (2) mit einer Klappe (10) zum Mischen der Luft mit der Umluft aus der Luftzufuhr (1) vorhanden ist.

5. Klimagerät nach einem der Ansprüche 1 bis 4,
**dadurch gekennzeichnet,**
**dass** sich unter dem Wärmetauscher (4) und/oder der Kühlmatte (27) eine Kondensatwanne (5) befindet.

6. Klimagerät nach Anspruch 5,
**dadurch gekennzeichnet,**
**dass** sich die Kondensatwanne (5) wenigstens teilweise unterhalb des Kulturtisches (6) fortführt.

7. Klimagerät nach Anspruch 5 oder 6,
**dadurch gekennzeichnet,**
**dass** die Kondensatwanne (5) mit Mitteln zum Temperieren des Kondensats ausgestattet ist.

8. Klimagerät nach einem der Ansprüche 1 bis 7,
**dadurch gekennzeichnet,**
**dass** es mit Mitteln für eine gleichmäßige Luftverteilung (8) ausgestattet ist.

9. Klimagerät nach Anspruch 8,
**dadurch gekennzeichnet,**
**dass** die Mittel für die gleichmäßige Luftverteilung (8) ein Gewebe oder perforiertes Material ist.

10. Klimagerät nach Anspruch 8 oder 9,
**dadurch gekennzeichnet,**
**dass** sich über der Kondensatwanne (5) ein Kulturtisch (6) befindet.

11. Klimagerät nach Anspruch 10,
**dadurch gekennzeichnet,**
**dass** der Kulturtisch (6) höhenverstellbar ist.

12. Klimagerät nach Anspruch 10 oder 11,
**dadurch gekennzeichnet,**
**dass** der Kulturtisch (6) mit mindestens einem Wärmeaustauscher (7) ausgestattet ist.

13. Klimagerät nach einem der Ansprüche 10 bis 12,
**dadurch gekennzeichnet,**
**dass** der Kulturtisch (6) einen luftdurchlässigen Boden besitzt.

14. Klimagerät nach einem der Ansprüche 1 bis 13,
**dadurch gekennzeichnet,**
**dass** es mit Mitteln zum Erzeugen eines gerichteten Luftstroms umfasst.

15. Klimagerät nach Anspruch 14,
**dadurch gekennzeichnet,**
**dass** die Mittel zum Erzeugen eines gerichteten Luftstroms lichtdurchlässige Planen und/oder Folien 14, 15 und 17 sind, die eine Luftzirkulation quer, längs, von oben nach unten oder von unten nach oben ermöglichen.

16. Klimagerät nach einem der Ansprüche 1 bis 15,
**dadurch gekennzeichnet,**
**dass** es über eine Einhausung (13) verfügt.

17. Klimagerät nach einem der Ansprüche 1 bis 16,
**dadurch gekennzeichnet,**
**dass** es über ein Insektenschutzmittel (20) verfügt.

18. Klimagerät nach einem der Ansprüche 1 bis 17,
**dadurch gekennzeichnet,**
**dass** es über Beleuchtungsmittel (13) verfügt.

19. Klimagerät nach einem der Ansprüche 1 bis 18,
**dadurch gekennzeichnet,**
**dass** es über Mittel zum Verändern der Gaszusammensetzung der Atmosphäre verfügt.

20. Klimagerät nach einem der Ansprüche 1 bis 19,
**dadurch gekennzeichnet,**
**dass** es über Mittel zum Verändern der Position der Pflanzen verfügt.

21. Klimagerät nach einem der Ansprüche 1 bis 21,
**dadurch gekennzeichnet,**
**dass** es mit Mitteln zum herausfahren der Pflanzen in das Freie ausgestattet ist.

22. Verfahren zum Klimatisieren von Pflanzen,
**dadurch gekennzeichnet,**
**dass** ein temperierter Luftstrom auf den Boden gerichtet und über eine luftdurchlässige Abdeckung (8) nach oben und/oder zur Seite gerichtet wird.

23. Verfahren nach Anspruch 22,
**dadurch gekennzeichnet,**
**dass** der Luftstrom über eine temperierte Wasseroberfläche geleitet wird.

24. Verfahren nach Anspruch 22 oder 23,
**dadurch gekennzeichnet,**
**dass** der temperierte Luftstrom in eine Vorzugsrichtung geleitet wird.

25. Verfahren nach Anspruch 24,
**dadurch gekennzeichnet,**
**dass** der Luftstrom entweder von unten nach oben oder von oben nach unten geleitet wird.

26. Verfahren nach Anspruch 24,
**dadurch gekennzeichnet,**
**dass** der Luftstrom entweder in Längsrichtung oder in Querrichtung über die Pflanzen gerichtet wird.

27. Verfahren nach einem der Ansprüche 22 bis 26,
**dadurch gekennzeichnet,**
**dass** dem Luftstrom ein Gas zugesetzt wird, um veränderte Umwelteinflüsse zu simulieren.

28. Verfahren nach einem der Ansprüche 22 bis 27,
**dadurch gekennzeichnet,**
**dass** die Luft mit einer definierten Luftfeuchtigkeit versehen wird.

29. Verfahren nach einem der Ansprüche 22 bis 28,
**dadurch gekennzeichnet,**
**dass** die Pflanzen in ihrer Position bewegt werden, um möglichst gleichmäßige Lichtverhältnisse für alle Pflanzen zu gewährleisten.
